# EUROPÄISCHE PATENTSCHRIFT

(11) **EP 0 751 022 B1**
(45) Veröffentlichungstag und Bekanntmachung des Hinweises auf die Patenterteilung: **06.05.1998**
(21) Anmeldenummer: 95110055.1
(22) Anmeldetag: 28.06.1995
(51) Int. Cl.: B60J 5/04

(54) **Kastenaufbau**
Container construction
Structure de caisse

(43) Veröffentlichungstag der Anmeldung: 02.01.1997
(73) Patentinhaber: KEPPLER GmbH Fahrzeugbau, 77767 Appenweier (DE)
(72) Erfinder: Schmiederer, Hermann, D-77815 Bühl (DE)
(74) Vertreter: Geitz, Heinrich, Dr.-Ing.

(56) Entgegenhaltungen:
- DE-A- 2 931 111
- DE-A- 3 342 646
- DE-A- 3 525 628

## Beschreibung

Die Erfindung betrifft einen Kastenaufbau, insbesondere für Nutzfahrzeuge, mit einem Kastenboden und einem Kastendach, wobei Wenigstens an den Eckpunkten des Kastenaufbaus jeweils eine vertikale Runge angeordnet ist, und mit wenigstens einer zweiteiligen Ladewand, die eine schwenkbare Unterwand und eine schwenkbar bewegliche Oberwand aufweist, wobei die Wandteile der Ladewand mittels wenigstens eines Zugmittels miteinander verbunden sind und die Oberwand in ihrem in der Schließlage oberen Bereich beidseits jeweils mit einer seitlich vorstehenden Führungsrolle versehen ist, die in einen unter dem Kastendach verlaufenden Führungsschlitz mit horizontaler Vorzugsrichtung eingreift, und die Oberwand in den von dieser in der Schließlage überstrichenen Bereich der Rungen über jeweils eine von letzteren seitlich vorstehende Schwenklagerrolle geführt ist.

Eine derartige Vorrichtung ist aus der DE-A-29 31 111 in Form einer zweiteiligen Bordwand für einen Lastwagen bekannt.

Bei dieser vorbekannten Vorrichtung ist mit der Unterwand ein Zugseil verbunden, das über eine an einer Runge oder Rückwand angebrachte Umlenkrolle sowie eine weitere in der Fahrzeugmitte unter dem Dach angeordnete weitere Umlenkrolle geführt und an einem Anschlag der Oberwand angelenkt ist. Das Zugseil hat die Aufgabe, die Bewegung der Unterwand auf die Oberwand so zu übertragen, daß beim Abklappen der Unterwand die Oberwand in eine Position unterhalb des Daches eingezogen wird. Geführt ist dabei die Oberwand über im Bereich ihres oberen Endes seitlich vorstehende Führungsrollen, die in einer sich unter dem Dach entlangerstreckenden Führungsschiene laufen.

Unbefriedigend bei dieser Vorrichtung ist die Notwendigkeit eines außerordentlich langen Zugseiles und dessen mehrfache Umlenkung über einerseits im Bereich einer Runge und andererseits in der Fahrzeugmitte unter dem Dach angeordnete Umlenkrollen.

Eine ganz ähnliche Einrichtung ist aus der DE-A-33 42 646 vorbekannt, bei der eine mit der Unterwand verbundene Rollenkette, die unter Zwischenschaltung eines mit dem Kastenrahmen verbundenen Lenkers mit der Oberwand verbunden ist, als Zugmittel dient. Die Rollenkette ist an dem Lenker in einem Abstand von dessen Anlenkachse angeschlossen, der durch die Größe der Kettenglider und den Abstand zwischen dem Umlenkpunkt für die Rollenkette und der Drehachse des Lenkers genau festgelegt ist.

Auch diese Vorrichtung ist im Aufbau kompliziert und aufwendig und erscheint angesichts der komplexen geometrischen Vorgaben und der umständlichen Gelenkhebelkonstruktion verbesserungsbedürftig.

Aus der DE-PS 30 17 729 ist eine weitere zweiteilige Ladewand für Kastenaufbauten von Nutzfahrzeugen bekannt. Bei dieser Ladenwand ist eine präzise Bewegungsführung der beiden Wandteile während des Öffnungs- und Schließvorganges der Ladewand dadurch gegeben, daß die Unter- und Oberwand mittels einer starren, aber beweglichen Lenker- und Dämpfungszylinderanordnung, die über ein Gelenkgetriebe zusammenwirkt, verbunden sind. Bei dieser Anordnung wird die Oberwand während des Öffnungsvorganges über das jeweilige Kastendach des Nutzfahrzeuges geschwenkt. Dies kann bei den oftmals beengten Platzverhältnissen im Ladebereich von Nutzfahrzeugen nachteilig sein.

Die der Erfindung zugrundeliegende Aufgabe besteht daher in der Schaffung eines Kastenaufbaus, insbesondere für Nutzfahrzeuge, der im Aufbau besonders einfach und funktionssicher ist.

Die der Erfindung zugrundeliegende Aufgabe ist bei einem Kastenaufbau gemäß Oberbegriff des Patentanspruchs 1 dadurch gelöst, daß die Schwenklagerrolle mit einer an der Oberwand angebrachten Führungsschiene zusammenwirkt, daß jeweils der Führungsschlitz in dem der entsprechenden Oberwand zugewandten Bereich in einem nach unten weisenden Führungsbogen ausläuft und daß die jeweilige Oberwand in ihrer Schließlage innerhalb des Kastenaufbaus vertikal beweglich gelagert ist.

Bei dem erfindungsgemäßen Kastenaufbau wird beim Öffnen über das Zugmittel eine vertikale Zugkraft in die Oberwand eingeleitet, die sich dadurch relativ leicht nach oben ziehen läßt. Die eigentlichen Kräfte treten erst dann auf, wenn die Oberwand beim weiteren Verschwenken der Unterwand in ihre Öffnungslage ihrerseits in die Schwenklage übergeht. Die Führung der Oberwand ist so ausgelegt, daß letztere soweit wie möglich nach oben gezogen und gleichzeitig die Schwenkbewegung gleichmäßig eingeleitet wird. Es ist daher ein gleichmäßiger, minimaler Kraftaufwand erforderlich.

Diese Lösung bietet ein Höchstmaß an fertigungstechnischer Vereinfachung, Servicefreundlichkeit und Wartungsarmut, da neben der Bordwand selbst nur das Zugmittel als bewegliche Einrichtung vorhanden ist. Durch das Zusammenspiel des gemäß Kennzeichen des Patentanspruchs 1 ausgeformten Führungsschlitzes mit der Schwenklagerrolle bei gleichzeitig in der Schließlage vertikal beweglicher Oberwand ist sichergestellt, daß beim Öffnen der Unterwand das Zugmittel so bewegt wird, daß die mit dem Zugmittel verbundene Oberwand zunächst eine überwiegend nach oben gerichtete Bewegung erfährt und somit aus ihrer Schließlage gehoben wird. Erst anschließend wird die Oberwand gemäß der Form des Führungsschlitzes verschwenkt. Hierzu sind keinerlei zusätzliche Hilfsmittel wie Hebel oder Lenker erforderlich.

Nach Anspruch 2 ist das jeweilige Zugmittel über eine einzige Umlenkung geführt. Hierdurch ist die Herstellung der Vorrichtung, die bereits im Gesamtaufbau gegenüber dem Stand der Technik vereinfacht ist, auch hinsichtlich der Führung des Zugmittels erleichtert. Etwaige Fehlerursachen sind zudem schnell auffindbar, da der gesamte Schwenkmechanismus sehr übersichtlich und daher leicht auf Fehlfunktionen hin überwachbar ist.

Dadurch, daß die geöffnete Oberwand vollständig unter das Kastendach schwenkbar ist, verändert sich der Platzbedarf für den Kastenaufbau während eines Be- und Entladevorganges in keiner Weise. Hierdurch ist den oftmals beengten Platzverhältnissen im Ladebereich eines Nutzfahrzeuges Rechnung getragen.

Bei einer vorteilhaften Weiterbildung ist die seitliche Führungsschiene der Oberwand jeweils in Richtung der zugeordneten Schwenklagerrolle geöffnet. Somit kann die Oberwand während des Öffnungsvorganges vollständig von der Schwenklagerrolle abgehoben werden, bis sie nahezu waagrecht unter dem Kastendach verschwenkt ist. Somit ist die maximale Ladehöhe des Kastenaufbaus bei vollständig geöffneter Oberwand gegeben.

Gemäß Anspruch 5 ist der Kastenaufbau beidseitig mit den erfindungsgemäßen Ladewänden versehen. Durch die besondere Anordnung der Führungsschlitze ist sichergestellt, daß die jeweiligen Oberwände der Ladewände von beiden Seiten her unter dem Kastendach des Kastenaufbaus verschwenkt werden können ohne sich dabei gegenseitig zu berühren. Gemäß dieser Ausführung kann ein derart ausgestattetes Nutzfahrzeug von beiden Seiten beladen werden. Hierbei ist auf beiden Seiten die jeweils maximale Ladehöhe gegeben. Insbesondere bei dieser Ausführung erweist es sich als besonders hilfreich, daß beide Oberwände unterhalb des Kastendaches verschwenkt werden können und somit der Platzbedarf für das zu be- oder entladende Nutzfahrzeug entsprechend gering ist.

Die Bedienung des erfindungsgemäßen Kastenaufbaus ist dadurch erleichtert, daß innerhalb des Kastendachbereichs angeordnete Kraftspeicher den Öffnungs- und Schließvorgang der Ladewand unterstutzen.

Gemäß der Weiterbildung nach Anspruch 7 ist sichergestellt, daß mit jeweils nur einer der jeweiligen Oberwand zugeordneten Zugfeder bei entsprechender Anordnung des zugehörigen Kettenrades der Öffnungsvorgang der Ladewand ebenso unterstützt ist wie der Schließvorgang der Ladewand. Jeweils zu Beginn des Öffnungs- oder Schließvorganges der Ladewand wirkt aufgrund der gespannten Zugfeder eine Zugkraft in Richtung der jeweils gewünschten Bewegung auf die Oberwand. Dies ist insbesondere bei größeren Kastenaufbauten ein wichtiges Hilfsmittel.

Dies ist eine Folge der geschickten Anordnung des Kettenrades oberhalb des entsprechenden Führungsschlitzes.

Nach Anspruch 8 ist die Oberwand der Ladewand sowie der entsprechende Dachträger des Kastenrahmens derart mit Winkelblechen versehen, daß sich im geschlossenen Zustand der Ladewand eine wirksame Schwingungs- und Geräuschdämpfung für die beweglich gelagerte Oberwand ergibt. Diese Weiterbildung ist insbesondere zur Vermeidung von Resonanzerscheinungen im Fahrbetrieb der Nutzfahrzeuge hilfreich.

In Verbindung mit zweigeteilten Bordwänden haben sich insbesondere Gliederketten als Zugmittel besonders bewährt. Nach Anspruch 9 kann auch bei dem Erfindungsgegenstand eine derart robuste und sichere Kraftübertragung eingesetzt werden. Gliederketten sind auch bei kleinen Umlenkradien ein verschleißarmes Kraftübertragungsmittel. Um ein etwaiges Längen der Gliederkette im Dauerbetrieb auszugleichen, kann die Befestigung der in Form eines Kettenrades realisierten Umlenkung der Gliederkette verschoben werden. Die Gliederkette kann hierdurch nachgespannt werden.

Gemäß Anspruch 10 ist das Zugmittel des Kastenaufbaus bei vollständig geschlossener sowie bei vollständig geöffneter Bordwand vollständig innerhalb der seitlich der Ladewand angeordneten Rungen geführt. Somit ist dieses bewegliche Element des Kastenaufbaus nur während der kurzfristigen Öffnungs- und Schließvorgänge von außen zugänglich. Hierdurch ist das Risiko einer Verschmutzung oder sonstiger Beeinträchtigungen der Funktionsfähigkeit der Anordnung erheblich minimiert. Dies ist schon deshalb von Vorteil, weil bei einer Beladung mit Gabelstaplern eine Beschädigung der entsprechend verkleideten Gliederkette ausgeschlossen ist.

Die Erfindung wird nachstehend anhand eines in der Zeichnung ausschnittsweise und schematisch dargestellten Ausführungsbeispieles näher erläutert. Es zeigen:
- Fig. 1: einen Teilquerschnitt eines Kastenaufbaus mit seitlich teilweise geöffneter Ladewand,
- Fig. 2: eine Detaildarstellung eines Querschnitts des Kastendaches im Bereich der Ladewand bei vollständig geschlossener Ladewand,
- Fig. 3: einen Querschnitt durch den gesamten oberen Bereich eines zweiflügeligen Kastenaufbaus mit beidseits angeordneten teilweise geöffneten Ladewänden,
- Fig. 4: einen Querschnitt durch den gesamten oberen Bereich eines zweiflügeligen Kastenaufbaus mit beidseits angeordneten Ladewänden, von denen eine vollständig und eine teilweise geöffnet ist,
- Fig. 5: eine Detaildarstellung der Umlenkung des Zugmittels der Ladewand im Querschnitt bei teilweise geöffneter Ladewand,
- Fig. 6: eine Detaildarstellung der Umlenkung des Zugmittels der Ladewand im Querschnitt bei vollständig geöffneter Ladewand,
- Fig. 7: eine Detaildarstellung der an eine seitliche Runge angrenzenden Oberwand der Ladewand im Längsschnitt durch eine Schwenklagerrolle des Kastenaufbaus und
- Fig. 8: eine Detaildarstellung der an eine seitliche Runge angrenzenden Oberwand der Ladewand im Längsschnitt durch eine mit der Oberwand verbundene Führungsrolle.

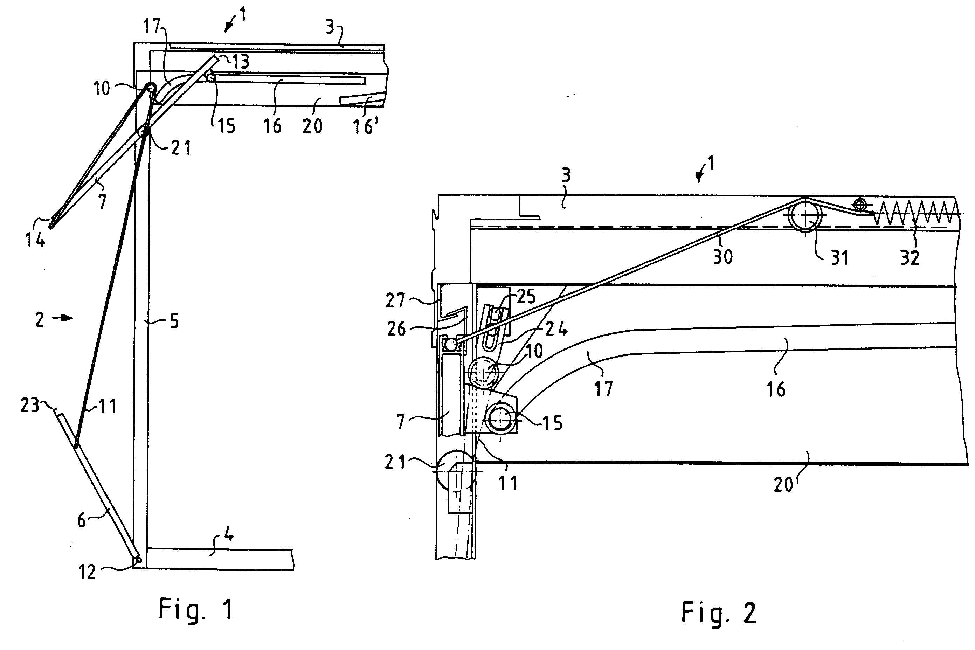

Der in Fig. 1 teilweise dargestellte Kastenaufbau 1 eines Nutzfahrzeuges ist mit zwei seitlichen Ladewänden 2, 2' ausgestattet. Der Kastenaufbau 1 besteht im wesentlichen aus einem Kastendach 3, einem Kastenboden 4 und wenigstens an den Eckpunkten des Kastenaufbaus aus vertikalen, das Kastendach 3 mit dem Kastenboden 4 verbindenden Rungen 5.

Die mit dem Kastenaufbau 1 verbundenen Ladewände 2, 2' umfassen jeweils eine Unterwand 6 und eine Oberwand 7.

Beide Wandteile 6, 7 sind durch eine im Kastendachbereich mittels eines Kettenrades 10 umgelenkte Gliederkette 11 verbunden.

Die Unterwand 6 ist um eine im Kastenbodenbereich angeordnete, horizontale, zwischen den der Ladewand 2 oder 2' benachbarten Rungen 5, 5' verlaufende Schwenkachse 12 aus einer Schließlage in eine Offenlage nach außen verschwenkbar.

Bei der Oberwand 7 wird zwischen einer in der Schließlage oberen Kante 13 und einer in der Schließlage unteren Kante 14 unterschieden. Im Bereich der Oberkante 13 ist die Oberwand 7 mit beidseits seitlich vorspringenden Führungsrollen 15 versehen. Die Führungsrollen 15 greifen jeweils in einen überwiegend horizontal und orthogonal zu der geschlossenen Ladewand 2 oder 2' verlaufenden Führungsschlitz 16 oder 16' eines ebenfalls orthogonal zu der geschlossenen Ladewand 2 oder 2' angeordneten Querträgers 20. In dem der jeweils geschlossenen Ladewand 2 oder 2' zugewandten Endbereich weist der Führungsschlitz 16 oder 16' einen nach unten weisenden Führungsbogen 17 oder 17' auf. Der Querträger 20 verläuft im Kastendachbereich im Abstand vom Kastendach 3.

Die der Ladewand 2 oder 2' jeweils benachbarten Rungen 5, 5' weisen in dem von der Oberwand 7, 7' überstrichenen Bereich eine in Richtung der jeweiligen Ladewand 2 oder 2' vorspringende Schwenklagerrolle 21, 21' auf. Die Schwenklagerrolle 21, 21' greift jeweils in eine in Richtung der Schwenklagerrolle 21, 21' geöffnete Führungsschiene 22, 22' der Oberwand 7, 7' ein. Die Unterwand 6 ist an ihrer Außenkante 18 mit einem sich maximal über die Gesamtbreite der Unterwand 6 erstreckenden Anschlagblech 23 für die geschlossene Oberwand 7 versehen.

Die Funktion der Ladewand 2 oder 2' wird nachstehend erläutert:

Sobald die Unterwand 6 motorisch angetrieben oder von Hand geöffnet wird, also nach außen geschwenkt wird, wird die mit der Unterwand 6 verbundene Gliederkette 11 so bewegt, daß die Oberwand (7) eine zumindest überwiegend vertikal nach oben gerichtete Zugkraft erfährt. Hierdurch wird bewirkt, daß die Oberwand 7 über das Anschlagblech 23 hinaus angehoben wird. Die Führungsrolle 15 wird dabei in dem Führungsbogen 17 zunächst nach oben und anschließend im weiteren Verlauf des Führungsschlitzes 16 horizontal in das Innere des Kastenaufbaus 1 geschoben. Die Oberwand 7 wird dabei über die Schwenklagerrolle 21 zunächst nach außen geschwenkt und schließlich vollständig zwischen den Querträger 20 und das Kastendach 3 geschoben.

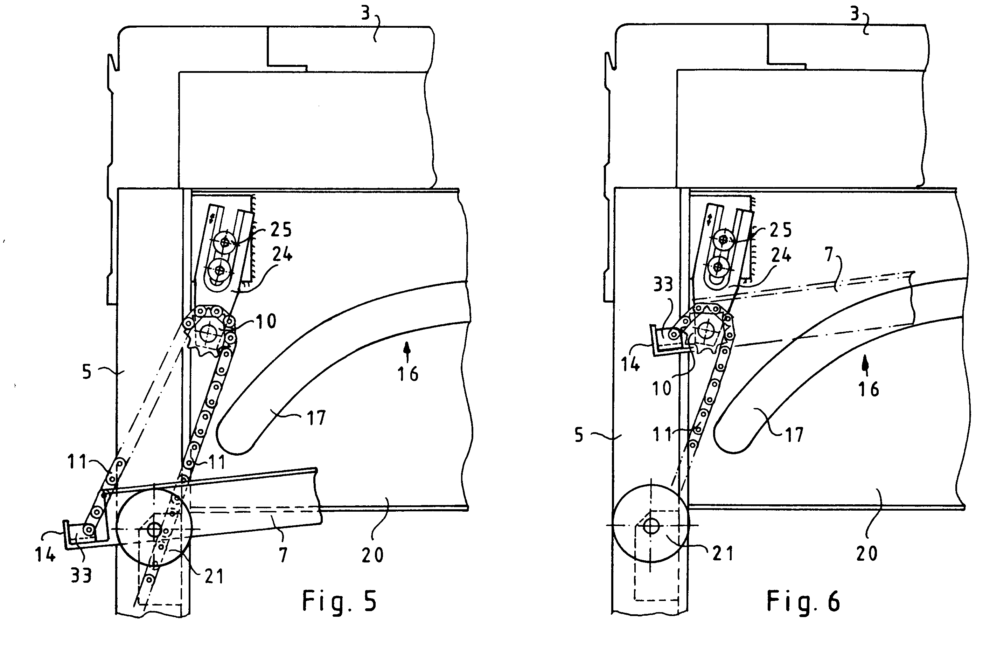

Die Oberwand 7 kann vollständig unter das Kastendach geschoben werden, weil die Umlenkung der Gliederkette 11 durch das Kettenrad 10 ausreichend weit in das Innere des Kastendachbereichs verlagert ist. Die genaue Anordnung des Kettenrades 10 ist in Fig. 2 dargestellt. Im einzelnen ist das Kettenrad 10 über eine Schelle 24 mit dem Querträger 20 verbunden. Die Schelle 24 ist mittels einer Langloch-Schraubverbindung 25 an dem Querträger 20 verschiebbar befestigt. Somit kann durch Verschieben des Kettenrades 10 die Gliederkette 11 im Bedarfsfalle gespannt oder nachgespannt werden. Die Befestigung des Kettenrades 10 ist auch in den Fig. 5, 6 und 7 dargestellt.

Fig. 2 ist darüber hinaus zu entnehmen, daß die Oberkante 13 der Oberwand 7 mit einem Winkelblech 26 versehen ist, das bei geschlossener Ladewand 2, 2' mit einem Gegenwinkel 27 des Kastendachs 3 derart verhakt, daß eine wirksame Schwingungsdämpfung für die geschlossene Oberwand 7 im Fahrbetrieb des Nutzfahrzeuges gewährleistet ist. Hierdurch werden im Fahrbetrieb typische Klappergeräusche, Resonanzerscheinungen und sonstige Schwingungseinflüsse auf die Oberwand 7 wirksam unterdrückt.

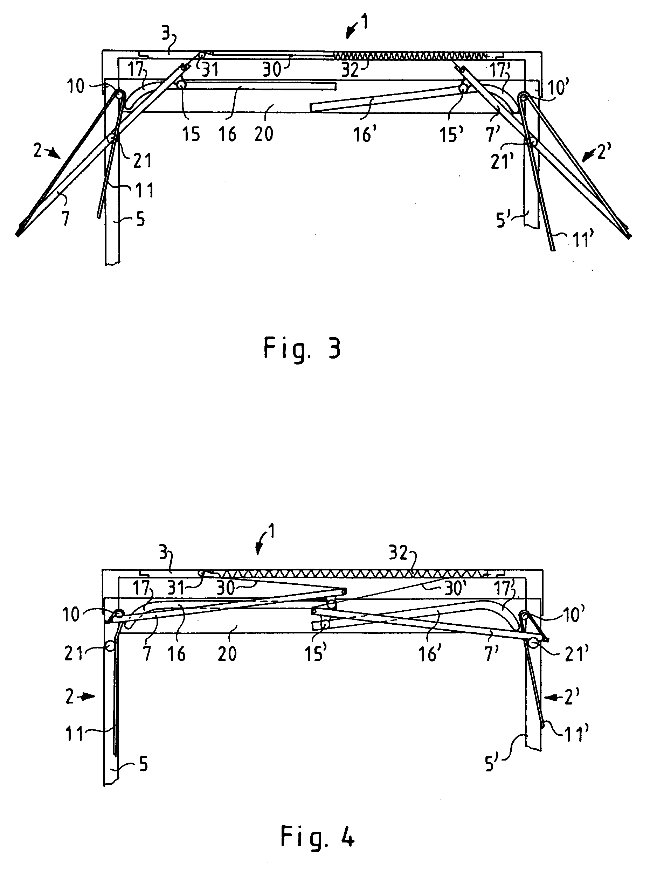

Die Bedienung der Ladewand 2 oder 2' ist dadurch erleichtert, daß die Oberkante 13, 13' der Oberwand 7, 7' über eine weitere Gliederkette 30, 30' und ein weiteres Kettenrad 31, 31' mit einer im Kastendachbereich angeordneten Zugfeder 32, 32' verbunden ist. Sobald die Oberwand 7, 7' aus ihrer Schließlage angehoben wird, unterstützt die Kraftwirkung der Zugfeder 32, 32' den eingeleiteten Öffnungsvorgang, bis die Oberwand 7, 7' soweit geöffnet ist, daß die Oberkante 13, 13' der Oberwand 7, 7' ungefähr bis auf Höhe einer gedachten Linie mit dem weiteren Kettenrad 31, 31' in das Innere des Kastenaufbaus 1 geschwenkt ist. Von diesem Zeitpunkt an bewirkt das weitere Öffnen der Oberwand 7, 7' gegen die Kraftwirkung der Zugfeder 32, 32' ein erneutes Spannen der Zugfeder 32, 32' so daß die Zugfeder 32, 32' bei vollständig geöffneter Ladewand 7, 7' erneut gespannt ist, wie in Fig. 4 gezeigt. Das erneute Spannen der Zugfeder 32, 32' in der Endphase des Öffnungsvorganges behindert den Öffnungsvorgang nicht, da hierbei ein gewisses Schwungmoment der Oberwand 7, 7' ausgenutzt werden kann. Sobald ein neuerlicher Schließvorgang der Ladewand 2, 2' eingeleitet wird, unterstützt die Kraftwirkung der erneut gespannten Zugfeder 32, 32' auch den Beginn des Schließvorganges bis zu dem Zeitpunkt in dem die Oberkante 13 der Oberwand 7, 7' wiederum den Bereich unterhalb der weiteren Umlenkrolle 31, 31' passiert. Analog zu dem beschriebenen Öffnungsvorgang wird somit auch in der Endphase des Schließvorganges die Zugfeder 32, 32' gespannt. Durch die besondere Anordnung des weiteren Kettenrades 31, 31' oberhalb des der entsprechenden Ladewand 2 oder 2' zugewandten Drittels der Gesamtlängserstreckung des Führungsschlitzes 16 oder 16' ist demnach sichergestellt, daß die jeweils einer Oberwand 7, 7' zugeordnete Zugfeder 32, 32' sowohl den Öffnungs- als auch den Schließvorgang der Ladewand 2, 2' in der jeweiligen Anfangsphase unterstützt.

Fig. 3 zeigt den zweiflügeligen Aufbau des Kastenaufbaus 1 mit teilweise geöffneten Ladewänden 2, 2' und Fig. 4 mit einer vollständig geöffneten linken Ladewand 2 und einer teilweise geöffneten rechten Ladewand 2'. Diese Figuren zeigen insbesondere die Anordnung des Querträgers 20 unterhalb des Kastendachs 3 derart, daß beide Oberwände 7, 7' vollständig unter das Kastendach 3 verschwenkt werden können. Bei vollständig geöffneten Ladewänden 2, 2' ergibt sich also auf keiner Seite des Kastenaufbaus 1 ein etwaiger Überstand über das Grundprofil des Kastenaufbaus 1. Ein mit diesem Kastenaufbau 1 versehenes Nutzfahrzeug kann demnach an jedem Ort beladen werden, dessen Platz für das Nutzfahrzeug selbst ausreicht.

Die Führungsschlitze 16 und 16' sind dabei in dem jeweiligen Querträger 20 derart angeordnet, daß die Oberwände 7 und 7' auch gleichzeitig unter das Kastendach geschwenkt werden können, ohne sich dabei gegenseitig zu behindern.

Neben der bereits angesprochenen beweglichen Befestigung des Kettenrades 10 zeigen die Fig. 5 und 6 zusätzlich, daß die Gliederkette 11 mit einer Halterung 33 mit der Unterkante 34 der Oberwand 7 verbunden ist.

Fig. 5 zeigt einen Ausschnitt des Kastenaufbaus mit teilweise geöffneter Oberwand 7 und Fig. 6 mit vollständig geöffneter Oberwand 7. Aus Fig. 6 wird dabei deutlich, daß die Oberwand 7 vollständig von der Schwenklagerrolle 21 abgehoben werden kann, um eine maximale Durchladehöhe zu erreichen. Dies ist dadurch möglich, daß die in Fig. 6 nicht dargestellte Führungsschiene in Richtung der Schwenklagerrolle 21 geöffnet ist. Eine maximale Ladehöhe ergibt sich deshalb, weil die vollständig geöffnete Oberwand 7 nahezu waagrecht unter das Kastendach 3 geschoben werden kann.

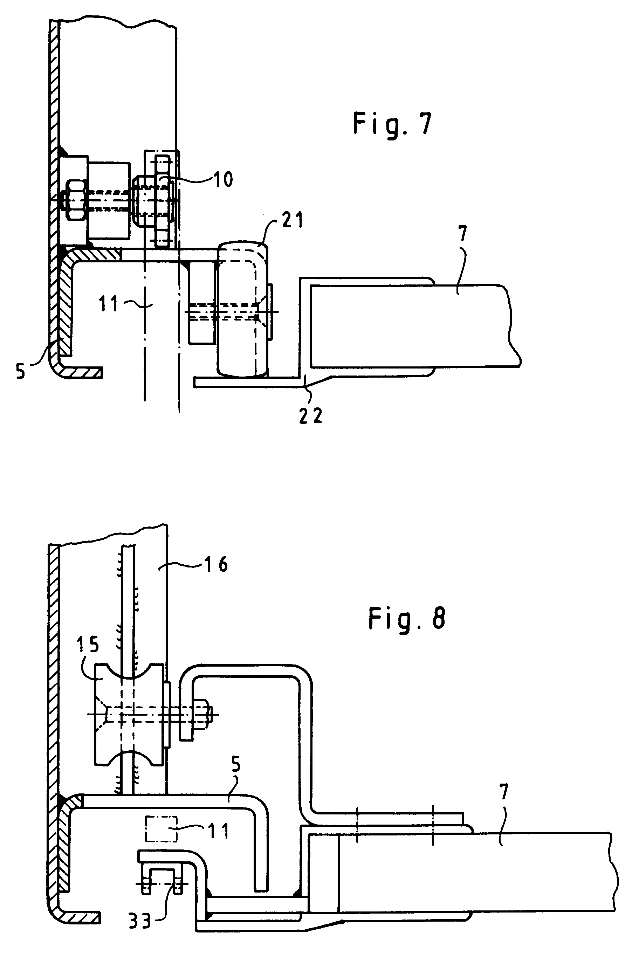

Die Fig. 7 und 8 zeigen Längsschnitte auf unterschiedlicher Höhe durch den seitlichen Randbereich der Oberwand 7.

Fig. 7 zeigt die seitliche Führungsschiene 22 der Oberwand 7 und die in diese seitliche Führungsschiene 22 eingreifende Schwenklagerrolle 21.

In Fig. 8 ist insbesondere die Befestigung der in den Führungsschlitz 16 ragenden Führungsrolle 15 dargestellt. Dieser Längsschnitt schneidet die Oberwand 7 also in einem Bereich, der etwas unterhalb der Oberkante 13 der Oberwand 7 liegt.

Den beiden Fig. 7 und 8 ist das U-Profil einer an die Ladewand 2 angrenzenden Runge 5 zu entnehmen. Die beidseits der Ladewand 2 angeordneten Gliederketten 11, 11' sind jeweils in der Offen- und Schließlage vollständig im U-Profil der jeweiligen Runge 5, 5' geführt. Die Gliederketten 11, 11' sind daher wirksam gegen diverse Außeneinflüsse, beispielsweise Verschmutzung, geschützt. Darüber hinaus sind die Gliederketten 11, 11' durch diese Verkleidung gegen etwaige Beschädigungen bei einer Staplerbeladung geschützt.

Grundsätzlich kann ein symmetrischer Aufbau für beide Seiten der Ladewand 2 oder 2' sowie eine analoge Funktion beider Ladewände 2 und 2' des Kastenaufbaus 1 unterstellt werden. Selbstverständlich kann der Kastenaufbau 1 auch lediglich mit einer Ladewand 2 oder 2' ausgeführt werden.

### Bezugszeichenliste -

- 1: Kastenaufbau
- 2, 2': Ladewand
- 3: Kastendach
- 4: Kastenboden
- 5: Runge
- 6: Unterwand
- 7: Oberwand
- 8: ---
- 9: ---
- 10: Kettenrad
- 11: Gliederkette
- 12: Schwenkachse
- 13: Oberkante der Oberwand
- 14: Unterkante der Oberwand
- 15: Führungsrolle
- 16, 16': Führungsschlitz
- 17: ---
- 18: ---
- 19: ---
- 20: Querträger
- 21: Schwenklagerrolle
- 22: Führungsschiene
- 23: Anschlagblech
- 24: Schelle
- 25: Schraube-Langloch-Verbindung
- 26: Winkelblech
- 27: Gegenwinkel
- 28: ---
- 29: ---
- 30: weitere Gliederkette
- 31: weiteres Kettenrad
- 32, 32': Zugfeder
- 33: Halterung

## Patentansprüche

1. Kastenaufbau, insbesondere für Nutzfahrzeuge, mit einem Kastenboden (4) und einem Kastendach (3), wobei wenigstens an den Eckpunkten des Kastenaufbaus (1) jeweils eine vertikale Runge (5 oder 5') angeordnet ist, und mit wenigstens einer zweiteiligen Ladewand (2 oder 2'), die eine schwenkbare Unterwand (6) und eine schwenkbar bewegliche Oberwand (7, 7') aufweist, wobei die Wandteile (6, 7) der Ladewand (2 oder 2') mittels wenigstens eines Zugmittels (11, 11') miteinander verbunden sind und die Oberwand (7, 7') in ihrem in der Schließlage oberen Bereich beidseits jeweils mit einer seitlich vorstehenden Führungsrolle (15, 15') versehen ist, die in einen unter dem Kastendach (3) verlaufenden Führungsschlitz (16, 16') mit horizontaler Vorzugsrichtung eingreift, und die Oberwand (7 oder 7') in dem von dieser in der Schließlage überstrichenen Bereich der Rungen (5 oder 5') über jeweils eine von letzteren seitlich vorstehende Schwenklagerrolle (21) geführt ist,
dadurch gekennzeichnet,
- daß die Schwenklagerrolle (21) mit einer an der Oberwand (7 oder 7') angebrachten Führungsschiene (22) zusammenwirkt,
- daß jeweils der Führungsschlitz (16 oder 16') in dem der entsprechenden Oberwand zugewandten Bereich in einem nach unten weisenden Führungsbogen (17, 17') ausläuft und
- daß die jeweilige Oberwand (7, 7') in ihrer Schließlage innerhalb des Kastenaufbaus (1) vertikal beweglich gelagert ist.

2. Kastenaufbau nach Anspruch 1, dadurch gekennzeichnet, daß beidseits der Ladewand (2, 2') je ein Zugmittel (11, 11') derart angeordnet ist, daß das eine Ende des Zugmittels (11, 11') mit der Unterwand (6) beabstandet von deren Anlenkachse (12) und das andere Ende des Zugmittels (11, 11') mit einer an der bei geschlossener Oberwand (7, 7') unteren Kante (14, 14') angeordneten Halterung verbunden und das Zugmittel (11, 11') über eine mit einem Querträger (20) verbundene Umlenkung (10, 10') geführt ist.

3. Kastenaufbau nach Anspruch 2, dadurch gekennzeichnet, daß der Querträger (20) mit dem Führungsschlitz (16, 16') soweit unterhalb des Kastendachs (3) und die Umlenkung (10, 10') soweit im Innenbereich des Kastenaufbaus (1) angeordnet ist, daß die geöffnete Oberwand (7, 7') vollständig unter das Kastendach (3) schwenkbar ist.

4. Kastenaufbau nach Anspruch 3, dadurch gekennzeichnet, daß die Führungsschiene (22, 22') der Oberwand (7, 7') jeweils in Richtung der zugeordneten Schwenklagerrolle (21, 21') geöffnet ist.

5. Kastenaufbau nach einem der vorhergehenden Ansprüche, dadurch gekennzeichnet, daß der Kastenaufbau (1) mit zwei seitlichen Ladewänden (2, 2') zweiflügelig ausgebildet ist, wobei die beiden Ladewände (2, 2') durch die beidseits angeordneten und jeweils die Führungsschlitze (16, 16') aufweisenden Querträger (20) miteinander verbunden sind und diese Querträger (20) soweit unterhalb des Kastendaches (3) verlaufen und die den einander gegenüberliegenden Oberwänden (7, 7') jeweils zugeordneten Führungsschlitze (16, 16') je eines Querträgers (20) in ihrem Überlappungsbereich derart übereinandergeführt sind, daß beide Oberwände (7, 7') während des Öffnungsvorganges berührungsfrei unter dem Kastendach (3) verschwenkbar sind.

6. Kastenaufbau nach einem der vorhergehenden Ansprüche, dadurch gekennzeichnet, daß ein im Kastendachbereich angeordneter Kraftspeicher (32, 32') über ein Kraftübertragungsmittel (30, 30') derart auf die Oberwand (7, 7') einwirkt, daß sowohl der Öffnungs- als auch der Schließvorgang wenigstens einer Ladewand (2, 2') unterstützt ist.

7. Kastenaufbau nach Anspruch 6, dadurch gekennzeichnet, daß jeder Ladewand (2, 2') eine im Kastendachbereich angeordnete Zugfeder (32, 32') zugeordnet ist, die über ein mittels eines Kettenrades (31, 31') umgelenkte Gliederkette (30, 30') an der in der Schließlage oberen Kante (13, 13') der Oberwand (7, 7') angreift, wobei das Kettenrad (31, 31') oberhalb des der entsprechenden Ladewand (2, 2') zugewandten Drittels der Gesamtlängserstreckung des jeweiligen Führungsschlitzes (16, 16') angeordnet ist.

8. Kastenaufbau nach einem der vorhergehenden Ansprüche, dadurch gekennzeichnet, daß die Oberkante (13, 13') der Oberwand (7, 7') mit wenigstens einem Winkelblech (26) verbunden ist und daß an dem zu der geschlossenen Ladewand (2, 2') parallelen Dachträger des Kastenaufbaus (1) jeweils an der dem Winkelblech (26) gegenüberliegenden Stelle ein nach oben weisender Gegenwinkel (27) am Dachträger derart befestigt ist, daß die Bleche (26, 27) in der Schließlage der Ladewand (2, 2') miteinander verrasten.

9. Kastenaufbau nach Anspruch 2, dadurch gekennzeichnet, daß das Zugmittel eine mittels eines Kettenrades (10, 10') umgelenkte Gliederkette (11, 11') ist, wobei das Kettenrad (10, 10') am Querträger (20) verschiebbar drehgelagert ist.

10. Kastenaufbau nach einem der vorhergehenden Ansprüche, dadurch gekennzeichnet, daß die beidseits der Ladewand bzw. der Ladewände (2, 2') angeordneten Rungen (5, 5') jeweils ein das Zugmittel (11, 11') übergreifendes U-Profil aufweisen.

## Claims

1. Box construction, in particular for commercial vehicles, with a box base (4) and a box roof (3), wherein a respective vertical stay (5 or 5') is arranged at least at the corner points of the box construction (1), and with at least one two-part loading wall (2 or 2'), which comprises a pivotable lower wall (6) and a pivotably movable upper wall (7, 7'), wherein the wall parts (6, 7) of the loading wall (2 or 2') are connected one with the other by means of at least one pulling means (11, 11') and the upper wall (7, 7') is provided in its region, which is the upper one in the closed situation, at each of both the sides with a respective laterally projecting guide roller (15, 15'), which engages into a guide slot (16, 16'), extending below the box roof (3) and with horizontal preferential direction and the upper wall (7 or 7') is guided in that region of the stays (5 or 5'), which is wiped over thereby in the closed situation, by way of a respective pivot bearing roller (21) projecting laterally from the stays, characterised thereby,
- that the pivot bearing roller (21) co-operates with a guide rail (22) mounted at the upper wall (7 or 7'),
- that each guide slot (16 or 16') runs out into a respective downwardly pointing guide bend (17, 17') in the region facing the corresponding upper wall and
- that the respective upper wall (7, 7') in its closed situation is borne to be vertically movable within the box construction (1).

2. Box construction according to claim 1, characterised thereby, that a respective pulling means (11, 11') is arranged at each of both sides of the loading wall (2, 2') in such a manner that the one end of the pulling means (11, 11') is connected with the lower wall (6) at a spacing from its hinge pin (12) and the other end of the pulling means (11, 11') is connected with a mounting arranged at the edge (14, 14'), which is the lower one when the upper wall (7, 7') is closed, and the pulling means (11, 11') is guided by way of a deflection (10, 10') connected with a transverse carrier (20).

3. Box construction according to claim 2, characterised thereby, that the transverse carrier (20) with the guide slot (16, 16') is arranged so far underneath the box roof (3) and the deflection (10, 10') is arranged so far in the interior region of the box construction (1) that the opened upper wall (7, 7') is pivotable completely below the box roof (3).

4. Box construction according to claim 3, characterised thereby, that the guide rail (22, 22') is open each time in the direction of the associated pivot bearing roller (21, 21').

5. Box construction according to one of the preceding claims, characterised thereby, that the box construction (1) is constructed to be two-winged with two lateral loading walls (2, 2'), wherein both the loading walls (2, 2') are each connected with the other by the transverse carriers (20) arranged on both sides and displaying the respective guide slots (16, 16') and these transverse carriers (20) extend so far underneath the box roof (3) and the guide slots (16, 16'), which are respectively associated with the mutually opposite upper walls (7, 7'), of each one transverse carrier (20) are guided one over the other in such a manner in their overlapping region that both upper wales (7, 7') are pivotable below the box roof (3) without contact during the opening operation.

6. Box construction according to one of the preceding claims, characterised thereby, that a force storage device (32, 32') arranged in the box roof region acts in such a manner by way of a force transmission means (30, 30') on the upper wall (7, 7') that the opening operation as well as also the closing operation of at least one loading wall (2, 2') is assisted.

7. Box construction according to claim 6, characterised thereby, that each loading wall (2, 2') is associated with a tension spring (32, 32'), which is arranged in the box roof region and engages at that edge (13, 13') of the upper wall (7, 7'), which is the upper one in the closed situation, by way of a link chain (30, 30'), which is deflected round by means of a chain wheel (31, 31'), wherein the chain wheel (31, 31') is arranged above that third of the total longitudinal extent of the respective guide slot (16, 16'), which faces the corresponding load wall (2, 2').

8. Box construction according to one of the preceding claims, characterised thereby, that the upper edge (13, 13') of the upper wall (7, 7') is connected with at least one metal angle plate (26) and that an upwardly pointing opposite angle member (27) is fastened each time at the place, which lies opposite the one metal angle plate (26), at the roof carrier, which is parallel to the closed loading wall (2, 2') of the box construction (1) in such a manner that the sheet metal plates (26, 27) each detent with the other in the closed situation of the loading wall (2, 2').

9. Box construction according to claim 2, characterised thereby, that the pulling means is a link chain (11, 11') deflected around by means of a chain wheel (10, 10'), wherein the chain wheel (10, 10') is rotatably borne at the transverse carrier (20) to be displaceable.

10. Box construction according to one of the preceding claims, characterised thereby, that the straps (5, 5'), which are arranged at both sides of the loading wall or the loading walls (2, 2'), are each a U-profile section member engaging over the pulling means (11, 11').

## Revendications

1. Caisse de fourgon, en particulier pour véhicules utilitaires, avec un fond de caisse (4) et un toit de caisse (3), où un rancher vertical (5 ou 5') est disposé au moins à chaque sommet de la caisse de fourgon (1), et avec au moins un panneau de chargement en deux parties (2 ou 2'), qui comporte un panneau inférieur pivotant (6) et un panneau supérieur pivotant mobile (7, 7'), les parties (6, 7) du panneau de chargement (2 ou 2') étant reliées l'une à l'autre par au moins un moyen de traction (11, 11'), et le panneau supérieur (7, 7') est, dans chacune de ses zones supérieures en position de fermeture, pourvu d'un galet de guidage (15, 15'), dépassant latéralement, qui entre en prise, avec une direction préférentielle horizontale, avec une fente de guidage (16, 16') courant en-dessous du toit (3) de la caisse, et chaque panneau supérieur (7 ou 7') est, dans la zone des ranchers (5 ou 5') recouverts par ce panneau en position de fermeture, guidé par un galet de palier pivotant (21), qui dépasse latéralement de cette zone, caractérisée en ce que le galet de palier pivotant (21) coopère avec un rail de guidage (22) rapporté à la panneau supérieur (7 ou 7') ; chaque fente de guidage (16 ou 16') se trouvant dans la zone dirigée vers le panneau supérieur correspondant se poursuit par un arc conducteur (17, 17'), dirigé vers le bas ; et chaque panneau supérieur (7, 7') est, dans sa position de fermeture, logé à l'intérieur de la caisse de fourgon (1), en pouvant subir un déplacement vertical.

2. Caisse de fourgon selon la revendication 1, caractérisée en ce que sur chaque côté du panneau latéral (2, 2') est disposé un moyen de traction (11, 11'), de façon qu'une extrémité du moyen de traction (11, 11') soit reliée au panneau inférieur (6) à distance de son axe d'articulation (12) et que l'autre extrémité du moyen de traction (11, 11') soit reliée à une attache, disposée contre l'arête (14, 14'), qui est inférieure quand le panneau supérieur (7, 7') est fermé, le moyen de traction (11, 11') étant guidé sur un renvoi (10, 10') relié à une poutre transversale (20).

3. Caisse de fourgon selon la revendication 2, caractérisée en ce que la poutre transversale (20), avec la fente de guidage (16, 16'), est disposée en-dessous du toit (3) de la caisse, et le renvoi (10, 10') est disposé dans la zone intérieure de la caisse de fourgon (1), sur une distance suffisante pour que le panneau supérieur ouvert (7, 7') puisse complètement pivoter pour arriver en-dessous du toit (3) de la caisse.

4. Caisse de fourgon selon la revendication 3, caractérisée en ce que chaque rail de guidage (22, 22') du panneau supérieur (7, 7') est ouvert dans la direction du galet de palier pivotant (21, 21') correspondant.

5. Caisse de fourgon selon l'une des revendications précédentes, caractérisée en ce que la caisse de fourgon (1), comportant deux panneaux de chargement latéraux (2, 2'), est conçue avec deux ailes, où les deux panneaux de chargement (2, 2') sont reliés l'un à l'autre par les poutres transversales (20), disposées des deux côtés, et comportant chacune les fentes de guidage (16, 16'), et ces poutres transversales (20) courent en-dessous du toit (3) de la caisse, et les fentes de guidage (16, 16') de chaque poutre transversale (20), affectées aux panneaux supérieurs (7, 7') opposés l'un à l'autre, sont, dans leur zone de chevauchement, guidées l'une au-dessus de l'autre, jusqu'à ce que les deux panneaux supérieurs (7, 7') puissent, pendant l'opération d'ouverture, pivoter sans contact en-dessous du toit (3) de la caisse.

6. Caisse de fourgon selon l'une des revendications précédentes, caractérisée en ce qu'un accumulateur de force (32, 32'), disposé dans la zone du toit de la caisse, agit par l'intermédiaire d'un moyen de transmission de force (30, 30') sur le panneau supérieur (7, 7') de façon à faciliter tant l'opération d'ouverture que l'opération de fermeture d'au moins un panneau de chargement (2, 2').

7. Caisse de fourgon selon la revendication 6, caractérisée en ce qu'à chaque panneau de chargement (2, 2') est affecté un ressort de traction (32, 32'), disposé dans la zone du toit de la caisse, et qui par une chaîne à maillons (30, 30'), renvoyée à l'aide d'un roue à chaîne (31, 31'), agit sur l'arête (13, 13'), supérieure en position de fermeture, du panneau supérieur (7, 7'), la roue à chaîne (31, 31') étant disposée au-dessus du tiers, dirigé vers le panneau de chargement correspondant (2, 2'), de l'étendue longitudinale totale de la fente de guidage (16, 16') correspondante.

8. Caisse de fourgon selon l'une des revendications précédentes, caractérisée en ce que l'arête supérieure (13, 13') du panneau supérieur (7, 7') est reliée à au moins une cornière (26), et qu'une contre-cornière (27), dirigée vers le haut, est fixée à la poutre de toit, au niveau de la poutre de toit, parallèle au panneau de chargement fermé (2, 2'), de la caisse de fourgon (1), en le point opposé à la cornière (26), de façon que les cornières (26, 27) s'encliquettent l'une avec l'autre dans la position de fermeture du panneau de chargement (2, 2').

9. Caisse de fourgon selon la revendication 2, caractérisée en ce que le moyen de traction est une chaîne à maillons (11, 11'), renvoyée à l'aide d'une roue à chaîne (10, 10'), cette dernière étant logée en rotation de façon à pouvoir se déplacer contre la poutre transversale (20).

10. Caisse de fourgon selon l'une des revendications précédentes, caractérisée en ce que les ranchers (5, 5'), disposés des deux côtés du panneau de chargement ou des panneaux de chargement (2, 2'), ont chacun un profil en U qui chevauche le moyen de traction (11, 11').
